# EUROPEAN PATENT APPLICATION

(11) **EP 3 474 510 A1**
(43) Date of publication of application: **24.04.2019**
(21) Application number: 17197613.7
(22) Date of filing: 20.10.2017
(51) Int. Cl.: H04L 29/06, H04W 12/04, H04W 88/08, H04W 84/12

(54) **GRANTING TO A DEVICE ACCESS TO AN ACCESS POINT**

(71) Applicant: Nokia Solutions and Networks Oy, 02610 Espoo (FI)
(72) Inventor: Liekens, Werner, 2018 Antwerpen (BE); Perez Caparros, David, 2018 Antwerpen (BE); Vandeputte, Frederik, 2018 Antwerpen (BE); Justen, Pascal, 2018 Antwerpen (BE); Cautereels, Paul, 2018 Antwerpen (BE); Van Cutsem, Tom, 2018 Antwerpen (BE)
(74) Representative: IP HILLS NV

(57) **Abstract**

According to an embodiment, a network management device (200) for granting to a first station (100) access to a first access point (110) is disclosed, the device (200) comprising a processing unit (201) configured to generate a first encryption key for encrypted communication between stations (100-102) and the first access point (110), and apply a first rule in the first access point (110) to accept encrypted communication with the first station (100) by the first encryption key, and when the first access point (110) receives data encrypted by the first encryption key from the first station (100) update the first rule in the first access point (110) to accept encrypted data based on the media access control address of the first station (100) and the first encryption key and reject encrypted communication by the first encryption key with another station (101-102).

## Description

### Technical Field

The present invention generally relates to a network management device for granting to a wireless device access to an access point, AP, providing a wireless network, for example, a Wi-Fi network.

### Background

Wireless networks, such as Wi-Fi networks, are identified by a wireless network name or service set identifier, SSID. Generally, when a user of wireless device, such as, for example, a smartphone, wishes to connect to an AP providing a particular Wi-Fi network, a list comprising SSIDs of available networks in the range of the wireless device is provided on, for example, a display of the wireless device. Subsequently, according to his or her preferences, a user of the device selects a network out of the list and next connects to the AP providing the Wi-Fi network.

Through this procedure, however, anyone may obtain access to an AP, which may lead to security breaches. In order to prevent them, most APs are nowadays protected by an encryption key through, for example, the Wi-Fi protected access, WPA, system or more advanced versions, like WPA2. Such so-called security protocols ensure that only dedicated users are granted access to an AP. In particular, only devices using the proper encryption key are granted access to the AP.

Once a device has successfully obtained access to an AP, the device mostly stays connected to it when it is located within the range of the network provided by the AP. When the device re-enters said range after leaving it, in general it may easily reconnect to it because mostly the same encryption key is kept during the lifetime of a wireless network. Moreover, it is mostly avoided to change an encryption key because in this occurrence, each wireless device connected to the AP needs to be updated with the new encryption key, which can be a cumbersome task.

### Summary

However, this may in turn again lead to security breaches. An encryption key may be handed over to other wireless devices without the consent of the owner or manager of an AP. Hereby, a multitude of wireless devices may connect to the AP without any consent. On top of that, all connected devices to an AP may have a view on all traffic that is traversing. As a result, the number of connected devices to the AP and traffic that is traversing it becomes disordered.

Another example of such a breach is media access control, MAC, spoofing wherein a device changes a factory-assigned MAC address in order to bypass network restrictions.

In contrast, it may be reasonable to assume that an owner or manager of an AP does have a correct overview of its connected devices and corresponding traffic. Yet, also in this occurrence problems may arise. When an earlier granted access to a particular device needs to be revoked, elaborated actions need to be taken, like, for example, updating the encryption key and exchange it with the connected devices, expect for the revoked one.

It is therefore an object of the present invention to alleviate the above drawbacks and to provide an improved solution for granting to a wireless device access to an AP.

This object is achieved, according to a first aspect, by a network management device for granting to a first wireless device, STA, access to a first AP the network management device comprising a processing unit configured to:
- generate a first encryption key for encrypted communication between STAs and the first AP; and
- apply a first rule in the first AP to accept encrypted communication with the first STA by the first encryption key; and
- when the first AP receives data encrypted by the first encryption key from the first STA update the first rule in the first AP to accept encrypted data based on the media access control, MAC, address of the first STA and the first encryption key; and reject encrypted communication by the first encryption key with another STA of the STAs.

The networking device may, for example, be incorporated in an AP, but may also be communicating with the AP over a wired or wireless connections and be hosted in the cloud.

Thus, firstly, an encryption key is generated which may be used for communication between STAs and the first AP. In other words, initially this encryption key is generated such that any STA of the STAs may use it to communicate with the first AP. Subsequently, a first rule in the first AP is applied in order to accept communication with the first STA wherein the communication is encrypted by the first encryption key. In other words, any STA out of the set of STAs that first sends encrypted communication by the first encryption key becomes the first STA. Then, when such encrypted data is received, the first rule is updated such that the first AP accepts encrypted data based on the MAC address of the first STA and based on the first encryption key. Simultaneously, data originating from other STAs using the same first encryption key is rejected. In other words, the first encryption key is associated to the MAC address of the first STA thereby making it unique and next ensuring that the same key becomes obsolete for other STAs.

Differently formulated, instead of accepting encrypted communication from any STA using a same encryption key, the network management device configures the first AP in such a way that an encryption key may only be used upon the attempt by one STA, for example the first STA that uses the first encryption key. When the first STA uses the first encryption key to communicate with the first AP, the same key becomes useless for other STAs. In other words, when other STAs uses the same first encryption key, the AP rejects the related communication.

It is an advantage that in this way each STA that communicates with the AP is associated in a unique manner with the AP through the link with the MAC address and the encryption key. This unique link may, for example, be stored in a memory such that an owner or a manager of an AP and/or corresponding Wi-Fi network obtains a well-ordered overview of all the connected and authenticated devices.

The links may also be stored and managed on a remote authentication dial in user service, RADIUS, server or a similar authentication, authorization and accounting, AAA, server.

It is another advantage that the concept of MAC spoofing may not be applied since not only the MAC address needs to be known in order to apply this spoofing technique but also the encryption key linked to that MAC address.

The encryption key may, for example, be a quick response, QR, code, a near-field communication, NFC, datagram, a string of characters, a bluetooth signal, a short message service, SMS, or even an email. The key may, for example for the QR-code or string of characters, presented in a user interface. A STA may then either read the QR-code with a camera, or copy the string of characters. When the encryption key is presented as an NFC datagram, an initiator transmits it to a STA which receives it.

The processing unit may, according to an embodiment, receive a request from a first STA to be granted access to the first AP prior to the generation of the first encryption key. Thus, when the processing unit receives such a request, the first encryption key is generated and subsequently send to the first AP.

According to an embodiment, the network management device is further configured that by updating the first rule, a first virtual network slice is created and comprises the first STA. Additionally or alternatively, the processing unit is further configured to apply a second rule in the first AP to accept encrypted communication with a second STA of the STAs by a second encryption key; and thereby create a second virtual network slice comprising the second STA.

A virtual network slice may be regarded as a subnetwork of the Wi-Fi network provided by the first AP. The Wi-Fi network may be, for example, a home network identified as 'home', while a network slice may be identified as 'kids' or 'guests'. The first rule thus allocates, according to an embodiment, the first STA to such a first slice. Additionally or alternatively, a second encryption key is generated for a second STA which is then allocated to a second virtual network slice. In this way, a well-ordered overview may be obtained of all the connected STAs wherein, for example based on a type of user, a STA is allocated to a dedicate slice. Furthermore, by on the one hand using a unique encryption key per STA and linking it to its corresponding MAC address, different rules may be applied per virtual network slice. For example, for the first network slice 'kids', restrictions regarding to particular network traffic may be imposed.

According to an embodiment, the processing unit is further configured to update the second rule such that the second virtual network slice further comprises the first STA.

In other words, the first rule still applies, but the second rule is updated by also allocating the first STA to the second virtual network slice. It is thus replicated such that is belongs to the first as well as the second network slice. An advantage of granting a particular STA access to more than one virtual network slice is that such a STA may, for example, serves as a device that passes through information beyond slices.

Alternatively, the processing unit is configured to update the first and the second rules such that the first STA migrates from the first virtual network slice to the second virtual network slice.

Instead of replicating the first STA to the second virtual network slice, the processing unit may also migrate the first STA from the first virtual network slice to the second virtual network slice. The first rule is updated by use of the first encryption key and the MAC address of the first STA and the first STA is no longer allocated to the first virtual network slice. Simultaneously, the second rule is updated as well by allocating the first STA, again by the use of the first encryption key and MAC address, to the second virtual network slice.

According to an embodiment, the processing unit is further configured to update the first rule such that the first AP rejects data from the first STA, wherein said update is based on a position, a time, a request and/or a conduct of the first STA.

Initially, the first STA is granted access to the first AP by the first rule and linked to the first encryption key and MAC address. However, the owner or manager of the Wi-Fi network provided by the first AP may also decide to revoke said access. This revocation may be, for example, based on a request from the owner or manager itself, but also from a request originating from a user from the first STA. Other conditions whereupon a revocation is based are, for example, a position of the first STA, a time or time period, for example during night-time, or even a conduct of the first STA, like excessive data traffic.

Since the first STA is connected through a unique way with the first AP, such a revocation or rejection from data traffic may be performed efficiently and without any effect on other STAs connected to the AP.

According to an embodiment, the processing unit is further configured to grant to a third STA access to the first virtual network slice by generating a third encryption key for encrypted communication between STAs and the first AP; and when the first AP receives data encrypted by the third encryption key from the third STA to update the first rule in the first AP to accept data based on the MAC address of the third STA and the third encryption key and to assign the third STA to the first virtual network slice.

The number of STAs assigned to a slice may be thus extended. In this way similar devices are grouped in a slice, while each STA stays connected to the AP in a unique way through the link with its corresponding encryption key and MAC address.

According to an embodiment, the processing unit is further configured to update rules in a second AP according to the first and/or second rule such that the first and/or second virtual network slice extends to the second AP.

A Wi-Fi network may be provided in a building, or more generally an environment, by more than one AP. Thus, if a user of a STA moves around in the building, the STA may switch over from one AP to another one. Thus, by updating a second AP according to the rules of the first AP, i.e. the first and/or second rule, the first and/or second virtual network slices are extended as well to the second AP, and advantageously the STA may also move around in the building or environment without a connection loss while at the same time the same slices are maintained.

The wireless network provided by the second AP may, for example, by identified by a same service set identifier, SSID, as the wireless network provided by the first AP.

According to a second aspect, the disclosure relates to a computer-implemented method for granting to a first wireless device, STA, access to a first access point, AP, the method comprising the steps of:
- generating a first encryption key for encrypted communication between STAs and the first AP; and
- applying a first rule in the first AP to accept encrypted communication with the first STA by the first encryption key; and
- when the first AP receives data encrypted by the first encryption key from the first STA updating the first rule in the first AP to accept encrypted data based on the media access control, MAC, address of the first STA and the first encryption key; and rejecting encrypted communication by the first encryption key with another STA of the STAs.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

### Brief Description of the Drawings

Fig. 1 illustrates a Wi-Fi network according to an embodiment of the invention; and
Fig. 2 illustrates a network management device according to an embodiment of the invention; and
Fig. 3 illustrates a user interface representing encryption keys according to an embodiment of the invention; and
Fig. 4 illustrates steps performed to grant to a device access to an access point according to an embodiment of the invention; and
Fig. 5 illustrates a suitable computing system for performing steps according to embodiments of the invention.

### Detailed Description of Embodiment(s)

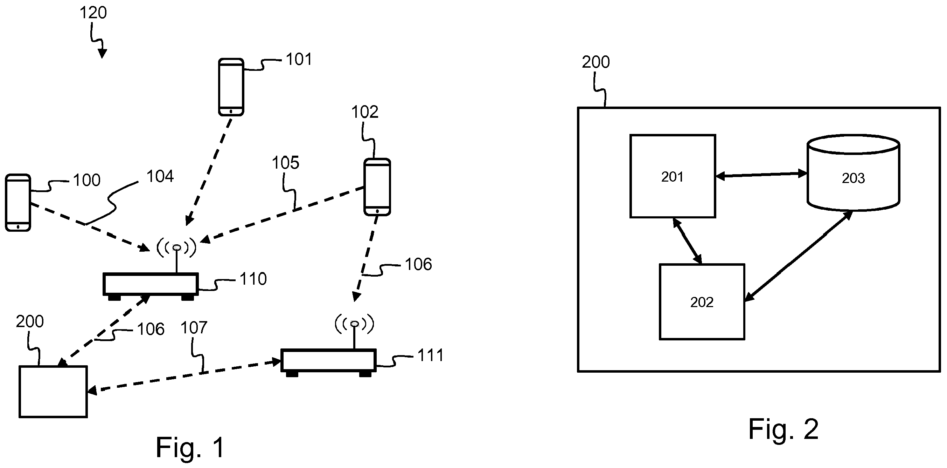

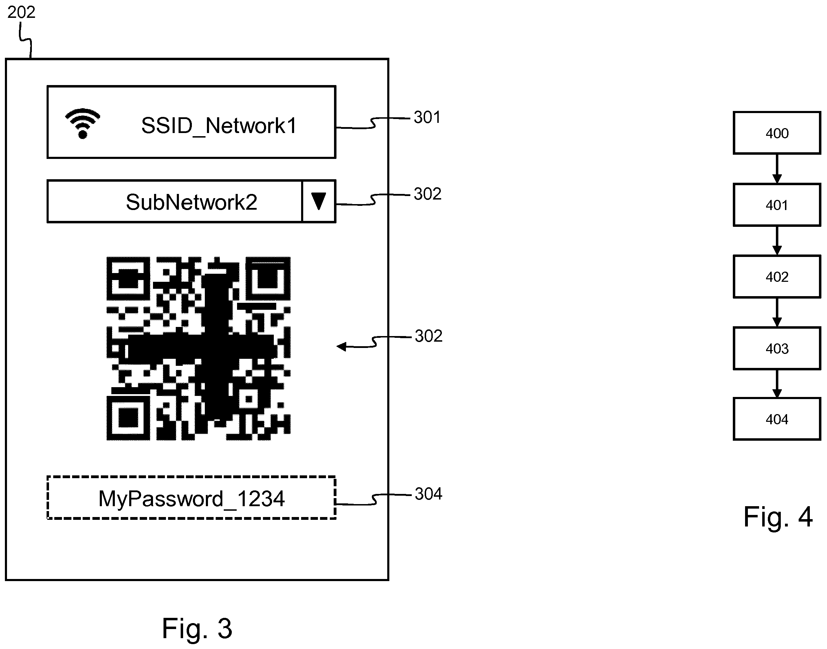

Fig. 1 illustrates a Wi-Fi network 120 according to an embodiment of the invention comprising an access point (AP) 110 and wireless stations or clients (STAs) 100-102. Fig. 2 illustrates a network management device 200 according to an embodiment to the invention comprising a processing unit 201, a user interface 202 and a memory 203. Fig. 3 illustrates the user interface 202 representing an encryption key according to different embodiments and Fig. 4 illustrates steps performed by the network management device 200 in order to generate an encryption key and subsequently granting to a STA of the STAs 100-102 access to AP 110 or 111 according to an embodiment of the invention.

The network management device 200 may, for example, be incorporated in an AP such as 110, or may also communicate with an AP through a connection 106 which is wired or wireless. The networking management 200 may also be operating and hosted in the cloud.

In a first step, the network management device 200 generates 400 an encryption key. The generation 400 of the encryption key may also be initiated on a request of one of the STAs 100-102. For example, STA 100 sends a request to AP 110 and AP 110 instructs the network management device 200 to generate 400 an encryption key.

The encryption key is, for example, a quick response (QR) code, a near-field communication (NFC) datagram, a string of characters, a Bluetooth signal, a short message service (SMS), an email or any another suitable presentation.

Depending on the type of representation of the encryption key, it is sent to a user of a STA, for example via SMS or email, or represented in a user interface 202. This user interface 202 is, for example, hosted on a webpage by the network management device 200 or in the cloud such that a user of a STA may easily access it.

Encryption keys may also be presented simultaneously in different representations, as illustrated in the user interface 202 of Fig. 3. For example, a generated 400 encryption key is presented as a QR code 302 and another encryption key as a character of strings 304. A user subsequently scans the QR code with a camera incorporated in its STA or when such a camera is not available, copies the string of characters 304 and input it in its STA. A difference is that the QR code provides higher security, while a set of characters is easier to type, but as a consequence has a lower security. The user interface 202 may also further indicate for which Wi-Fi network 120 and corresponding service set identifier (SSID) 301 the encryption key is suitable to grant access to. Additionally, a virtual network slice or subnetwork 302 of the Wi-Fi network 301 is also represented.

Next, the generated 400 encryption key is transferred 401 to a STA of one of the STAs 100-102, for example STA 100, by, as already highlighted, for example scanning the QR code 302 with a camera or copying the string of characters 304. In other words, STA 100 becomes the first STA of the STAs 100-102 that uses the generated 400 encryption key. The first STA 100 thus uses the encryption key for onboarding on the virtual network slice 'SubNetwork2' 302 of the Wi-Fi network labelled 'SSID_Network1' 301 through AP 110.

Simultaneously, the AP 110 is instructed 402 through a first rule to initially accept encrypted communication by the first encryption key from a STA that is the first one that uses the encryption key, thus the first STA, in this case STA 100. When the AP 110 receives 403 such encrypted communication, the first rule is updated 404 such that the AP 110 accept encrypted data based on the media access control (MAC) address of the first STA 100 and the first encryption key. In other words, the first encryption key is linked to the MAC address of the first STA 100. Furthermore, the first rule is also updated 401 such that encrypted communication by the first encryption key with another STA is rejected. In other words, STA 101-102 are no longer capable of using the first encryption for onboarding on the AP 110. As a result, the STA 100 and the AP 110 are connected through connection 104 in a unique manner, i.e. through the first encryption key and the MAC address. This link may further be stored in the memory 203.

To indicate an open key, in other words one that is not yet used to obtain access, it is indicated by the MAC address 00:00:00:00:00:00. Once the key is used, a MAC address is assigned to the Wi-Fi key.

The network management device 200 has thus linked the MAC address of STA 100 with the first encryption key and with the SSID of the Wi-Fi network provided by the AP 110. Optionally, it may also be further linked with the virtual network slice of this Wi-Fi network. In this occurrence, the first rule is updated 404 such that the STA 100 is allocated to this virtual network slice 302.

In order to onboard other STAs 101-102 and since the first encryption key is made obsolete for them, the network management device 200 repeats the steps and generates 400 a second encryption key. The STA of the STAs 101-102 that firstly uses this generated 400 second encryption key becomes the second STA, for example STA 101. Subsequently, a second rule is updated 404 such that this second encryption key is linked to the MAC address of the second STA 101 and again is made obsolete for other STAs 100 and 102. According to an embodiment, a second virtual network slice different from the first virtual network slice is created as well comprising the second STA 101.

Obviously, the steps may be repeated, now by generating 400 a third encryption key which is used by STA 102 the onboard on AP 110.

In the memory 203 of the network management device 200 the unique links between each STA via their MAC address and corresponding encryption key is stored.

The rules may further be updated such that an access to a particular STA is revoked. This may, for example, be based on a different set of parameters and/or conditions. For example, based on a behaviour of a STA, like excessing data traffic, an access is permanently or temporary revoked. Since each STA is uniquely linked to the AP, this is easily done without influencing the connection of other STAs of the network.

A STA in the Wi-Fi network 120 may also be moving around. In doing so, it is possible that a connection with an AP that provides the Wi-Fi network is lost. For example, STA 102 moves away from AP 110 such that connection 105 is interrupted. The network management device 200 is further configured to update rules in the second AP 111 through connection 107 such that STA 102 is granted access to AP 111 and thereby establishing connection 106. As a result, the STA 102 continues being connected to the Wi-Fi network 120 while maintaining the rules. In other words, the rules stored in memory 203 may partly or in total be updated in other APs.

The updating of different APs in the Wi-Fi network may also be performed prior to any movement of a STA. In the example of the Wi-Fi network 120 in Fig. 1, the APs 110 and 111 support the same SSID. A generated encryption key is distributed by the network management device 200 on each AP. Therefore, a STA is granted access to the Wi-Fi network through either AP 110 or AP 111 and thereafter hassle-free moves around in the environment.

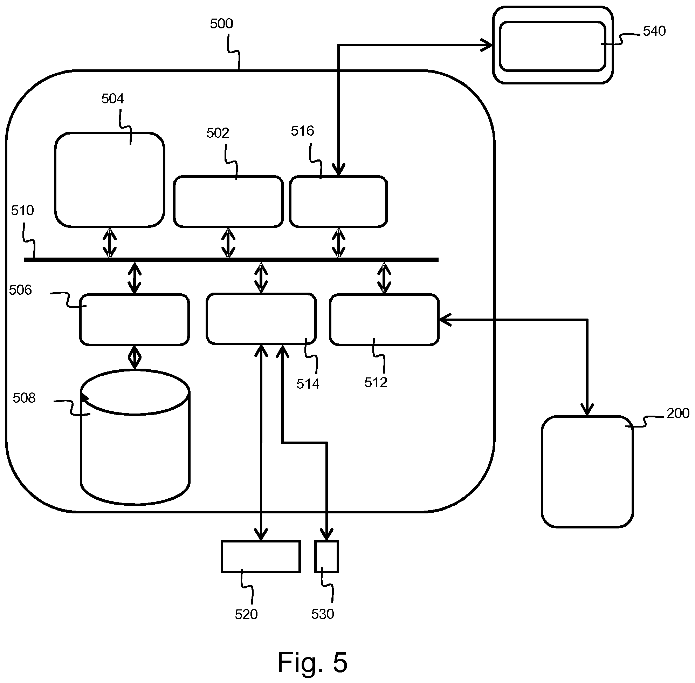

Fig. 5 shows details of the network management device 200 according to a further embodiment of the invention. Network management device 200 is suitable for performing the steps according to the above embodiments. Network management device 200 may also be incorporated in or used as AP 110 or 111. Network management device 200 may in general be formed as a suitable general-purpose computer and comprise a bus 510, a processor 502, a local memory 504, one or more optional input interfaces 514, one or more optional output interfaces 516, a communication interface 512, a storage element interface 506 and one or more storage elements 508. Bus 510 may comprise one or more conductors that permit communication among the components of the network management device 200. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator to input information to the network management device 200, such as a keyboard 520, a mouse 530, a pen, voice recognition and/or biometric mechanisms, etc. Output interface 516 may comprise one or more conventional mechanisms that output information to the operator, such as a display 540, etc. Communication interface 512 may comprise any transceiver-like mechanism such as for example one or more Ethernet interfaces that enables network management device 200 to communicate with other devices and/or systems, for example with AP 110 or 111. The communication interface 512 of network management device 200 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The network management device 200 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A network management device (200) for granting to a first wireless device, STA (100), access to a first access point, AP (110), the network management device (200) comprising a processing unit (201) configured to:
- generate a first encryption key for encrypted communication between STAs (100-102) and the first AP (110); and
- apply a first rule in the first AP (110) to accept encrypted communication with the first STA (100) by the first encryption key; and
- when the first AP (110) receives data encrypted by the first encryption key from the first STA (100) update the first rule in the first AP (110) to accept encrypted data based on the media access control, MAC, address of the first STA (100) and the first encryption key; and reject encrypted communication by the first encryption key with another STA of the STAs (101-102).

2. Network management device (200) according to claim 1, wherein, by updating the first rule, a first virtual network slice comprising the first STA (100) is created.

3. Network management device (200) according to claim 2, wherein the processing unit (201) is further configured to:
- apply a second rule in the first AP (110) to accept encrypted communication with a second STA (101) of the STAs by a second encryption key; and
- thereby create a second virtual network slice comprising the second STA (101).

4. Network management device (200) according to claim 3, wherein the processing unit (201) is further configured to update the second rule such that the second virtual network slice further comprises the first STA (100).

5. Network management device (200) according to claim 3, wherein the processing unit (201) is further configured to update the first and the second rules such that the first STA (100) migrates from the first virtual network slice to the second virtual network slice.

6. Network management device (200) according to claim 1, wherein the processing unit (201) is further configured to update the first rule such that the first AP (110) rejects data from the first STA (100), wherein said update is based on a position, a time, a request and/or a conduct of the first STA (100).

7. Network management device (200) according to claim 2 or 3, wherein the processing unit (201) is further configured to grant to a third STA (102) access to the first virtual network slice by:
- generating a third encryption key for encrypted communication between STAs (100-102) and the first AP (110); and
- when the first AP (110) receives data encrypted by the third encryption key from the third STA (102) to update the first rule in the first AP (110) to accept data based on the MAC address of the third STA (102) and the third encryption key and to assign the third STA (102) to the first virtual network slice.

8. Network management device (200) according to claim 3, wherein the processing unit (201) is further configured to update rules in a second AP (111) according to the first and/or second rule such that the first and/or second virtual network slice extends to the second AP (111).

9. Network management device (200) according to claim 8, wherein a wireless network provided by the second AP (111) is identified by a same service set identifier, SSID, as the wireless network provided by the first AP (110).

10. Network management device (200) according to claim 1, wherein the processing unit (201) is further configured to:
- before the generation of the first encryption key, to receive a request to grant to the first STA (100) access to the first AP (110); and
- send the first encryption key in reply.

11. Network management device (200) according to claim 10, wherein the encryption key is sent as at least one of the group of:
- a quick response, QR, code; and
- a near-field communication, NFC, datagram; and
- a string of characters; and
- a bluetooth signal; and
- a short message service, SMS;
- an email.

12. A method for granting to a first wireless device, STA (100), access to a first access point, AP (110), the method comprising the steps of:
- generating a first encryption key for encrypted communication between STAs (100-102) and the first AP (110); and
- applying a first rule in the first AP (110) to accept encrypted communication with the first STA (100) by the first encryption key; and
- when the first AP (110) receives data encrypted by the first encryption key from the first STA (100) updating the first rule in the first AP (110) to accept encrypted data based on the media access control, MAC, address of the first STA (100) and the first encryption key; and rejecting encrypted communication by the first encryption key with another STA of the STAs (101-102).

13. A computer program product comprising computer-executable instructions for performing the method according to claim 12 when the program is run on a computer.

14. A computer readable storage medium comprising the computer program product according to claim 11.

15. A data processing system programmed for carrying out the method according to claim 12.
